# EUROPEAN PATENT SPECIFICATION

(11) **EP 2 655 029 B1**
(45) Date of publication and mention of the grant of the patent: **02.08.2017**
(21) Application number: 11797149.9
(22) Date of filing: 28.11.2011
(51) Int. Cl.: B29B 7/42, B29B 7/74, B29C 47/38, B29C 47/40, B29C 47/64, B29C 47/76, B29D 30/00, B29B 7/48, B29B 7/84, B29C 47/00

(54) **METHOD FOR PRODUCING TYRES**
VERFAHREN ZUR HERSTELLUNG VON REIFEN
PROCEDE POUR LA FABRICATION DES PNEUMATIQUES

(30) Priority: 22.12.2010 IT MI20102360; 03.03.2011 US 201161448999 P
(43) Date of publication of application: 30.10.2013
(73) Proprietor: Pirelli Tyre S.p.A., 20126 Milano (IT)
(72) Inventor: BOTTOMLEY, Alan, I-20126 Milano (IT); TESTI, Stefano, I-20126 Milano (IT); HANEL, Thomas, Breuberg (DE); SCURATI, Alberto, I-20126 Milano (IT)
(74) Representative: Tirloni, Bartolomeo
(86) International application number: PCT/IB2011/055323
(87) International publication number: WO 2012/085714

(56) References cited:
- EP-A2- 0 928 679
- WO-A1-2010/073275
- Fritz Röthemeyer, Franz Sommer: "Kautschuktechnologie", 31 December 2001 (2001-12-31), Hanser, München, Wien ISBN: 3446161694 * page 669 - page 670 *

## Description

### FIELD OF THE INVENTION

The present invention relates to a method and an apparatus for producing tyres. More particularly, the present invention relates to a method and an apparatus in which at least one elastomeric compound used in manufacturing one or more structural elements of the tyre is produced by at least one continuous-mixing step.

### KNOWN ART

The mixing processing consists in mixing a polymeric base together with other ingredients according to predetermined recipes or formulas for obtaining semimanufactured products to be used in the following steps of the tyre production cycle.

This processing is typically carried out with continuous or discontinuous mixers.

The continuous mixers or extruders substantially comprise a cylindrical chamber inside which a worm screw or a plurality of screws rotate for conveying the material being processed from one end to the other of said chamber, in a continuous manner; mixing of the material takes place while travelling inside the cylindrical chamber.

Discontinuous (closed) mixers substantially comprise a mixing chamber containing a pair of rotors turning in opposite ways relative to each other; the material is processed in predetermined discrete amounts (batches), that are fully unloaded from the mixer at the end of the processing before starting processing of a new batch.

Document US 2004/0094862 discloses a multi-shaft extruder for mixing an elastomer with some filler, in particular rubber, and with a softening agent (oil for example) and/or additives. The extruder comprises the following regions placed in succession in the conveying direction of the product: a feeding region, in which the elastomer with the filler, the softening agent, the additives and possibly water are fed; a mastication/plasticization region with at least one mastication element, in which the elastomer with the additives is converted into a fluid and compact mixture; a dispersion region with at least one additional mastication element, in which the filler is fragmented and distributed. In the mastication and dispersion regions, the extruder body has respective vent openings through which the metered water in the feeding region and the softening agent are removed from the product before the latter leaves the extruder at an outlet end placed more downstream.

Document US7654725 discloses an endless extruder and a method of degassing viscous and viscoelastic material in an endless extruder provided with a plurality of process chambers. In the extruder's degassing regions at least one process chamber provided with a degassing opening is present.

Document EP1252999 discloses a mastication apparatus for rubber-based compositions. This apparatus comprises a drum with a cylindrical chamber. A screw assembly rotates in the chamber in such a manner that the material to be submitted to mastication is extruded along the axial direction through rotation of the screws. The screws have sections with helical blades and sections with mastication blades thereby enabling the material to flow through the space bounded between an inner wall of the chamber and the section provided with the mastication blades, and shearing forces to be applied to the material itself. A batcher feeds the material to the chamber. An injection device injects cooling water into the chamber. A discharge device comprising suction pumps separates the cooling water from the material and discharges the water from the chamber. The pumps are connected to suction ports formed on the drum at some of the sections with helical blades and reduce pressure so as to atomise and extract the previously introduced cooling water.

Documents US03683511, US03932115, US04168799, US04565512, US05205972, US05283021, US5836682, US06613128, US07407611, US2002186612, US2004094862, US2004222543, US2006034147, US2007121421, US2008310251, WO2000059988, WO2000178967 disclose extrusion devices provided with ventilation openings for eliminating gas and/or water from the compound (de-gassing, dewatering).

EP0928679A2 discloses a method for producing tyres, wherein an already vulcanised carcass body is preheated, covered with non-vulcanised rubber mixtures and subsequently vulcanised.

WO2010073275A1 discloses a compound plant for processing elastomeric compounds for tyres wherein one batch mixing device is put in combination with one multi-shaft continuous mixing device.

### SUMMARY OF THE INVENTION

The Applicant has found that the systems provided in mixers for removal of fluids contained in the compounds (gas, water, solvents, etc.) work at pressure values little lower than the atmospheric pressure.

In the mentioned known art, the specific pressure values for pollutant removal probably are not believed to be critical, to such an extent that they are not even specifically indicated.

Referring particularly to mixing in a mixing extruder, the Applicant in fact has found that if the suction pressure is maintained within a range of values included between about 700 mbars to about 200 mbars, removal of undesirable substances appears to be carried out in an efficient manner over the whole pressure range.

For instance, the Applicant has found that within the range of the indicated suction pressures, the temperature and pressure of the compound at the head of the mixing extruder have a regular course, i.e. they are maintained substantially constant.

The Applicant however has unexpectedly and surprisingly discovered that the workability features of an elastomeric compound as well as the static and dynamic mechanical features of vulcanised samples of an elastomeric compound and the performances that can be found in a tyre obtained from semimanufactured articles made up of an elastomeric compound, change in a sharp and sudden manner when in a continuous mixer during the mixing process the compound is submitted to suction for extraction of undesirable substances, which suction is carried out at very low pressure values.

The present invention relates to a method for producing tyres according to claim 1.

Preferred embodiments of the invention are set forth in dependent claims 2 to 14.

The method according to the invention can further comprise the assembly of a green tyre using the plurality of structural elements, wherein at least one structural element of said plurality of structural elements comprises said elastomeric compound.

The method in accordance with the invention may further comprise submitting the green tyre to moulding and cross-linking so as to obtain a finished tyre.

According to a preferred embodiment, fluid suction is carried out in the vicinity of the ejection of the elastomeric compound from the mixing extruder. Preferably, the mixing extruder comprises an extruder head.

Preferably, the suction pump is in fluid connection with the inner chamber in the vicinity of said extruder head.

Suction is preferably carried out at a point where possible additives or cooling water are no longer required to enable processing of the compound, and/or when production of fluids to be eliminated has come to an end, which production is due to interaction between elements of the compound during mixing.

In the mixing extruder the precursor of the elastomeric compound is submitted to mastication steps alternated with transport steps and, preferably, suction of the fluids is carried out during at least one of the transport steps.

According to preferred embodiments, the mixing extruder comprises a holding body confining the inner chamber and at least one extrusion screw located in the inner chamber. The extrusion screw and inner chamber comprise mastication regions that along the longitudinal axis of the inner chamber are alternated with advancing regions of the compound precursor.

Suction enables the undesirable fluids produced in the preceding mastication step to be eliminated.

Preferably, the produced elastomeric compound is adapted to produce a tread.

Preferably, said reinforcing filler is a so-called white filler selected from hydroxides, oxides and hydrated oxides, salts and hydrated metal salts or mixtures thereof.

Preferably, said reinforcing filler is a silica-based filler. The silica present in the compound precursor can interact during mixing with the silane coupling agent that is added for making the silica compatible and dispersible in the elastomeric polymer. Typically from this reaction ethanol is produced that is efficiently extracted and eliminated through high vacuum suction.

In accordance with an embodiment of the invention, the mixing extruder comprises a mandrel inserted in the holding body and extending along the longitudinal axis. Said mandrel and holding body confine the preferably annular inner chamber.

The mixing extruder comprises a plurality of extrusion screws disposed in the inner chamber and parallel to said longitudinal axis.

The mixing extruder is of the type consisting of an annular chamber and also referred to as "ring extruder".

According to a variant, the inner chamber has a bilobate transverse section and the mixing extruder comprises two extrusion screws disposed in mutual side by side relationship and each at a respective lobe.

Preferably, the holding body comprises a plurality of annular sectors aligned along the longitudinal axis and in which the suction pump is in fluid connection with at least one of said annular sectors.

The division into annular sectors allows the mixing extruder to be planned and configured according to specific requirements for producing compounds.

In accordance with an embodiment, said annular sector comprises at least one suction duct having an end connected to the inner chamber and an opposite end connected to the suction pump.

Preferably, said annular sector comprises two diametrically opposite suction ducts connected to the suction pump. Use of the two ducts makes extraction of undesirable fluids from the compound more efficient and uniform.

The suction pump can preferably be of the dry, liquid ring or oil type.

Preferably, the dry suction pump has a nominal suction capacity included between about 100 m³/h and about 450 m³/h.

Preferably, the dry suction pump has a power included between about 2 kW and about 15 kW.

Further features and advantages will become more apparent from the detailed description of a preferred but not exclusive embodiment of a method according to the present invention.

### BRIEF DESCRIPTION OF THE DRAWINGS

This description will be set out hereinafter with reference to the accompanying drawings, given by way of non limiting example, in which:
- Fig. 1 is a diagrammatic plan view of a plant for producing tyres;
- Fig. 2 shows a diagrammatic side view of a mixing extruder belonging to the plant in Fig. 1;

- Fig. 3 is a diagrammatic front view in section of the mixing extruder in Fig. 2;
- Fig. 4 is a diagrammatic view in diametrical section of a tyre for vehicle wheels obtainable with the plant in Fig. 1;
- Fig. 5 diagrammatically shows another tyre for vehicle wheels in diametrical section, obtainable with the plant in Fig. 1;
- Figs. 6a-6b show graphs relating to tests carried out on compound samples;
- Fig. 7 is a "radar" graph showing a comparative test carried out between a compound sample according to the invention and a comparative or control compound sample.

### DETAILED DESCRIPTION OF EMBODIMENTS OF THE INVENTION

With reference to the mentioned figures, a multi-screw mixing extruder belonging to an apparatus for production of elastomeric compounds used for producing tyres for vehicle wheel has been generally identified by reference numeral 1.

In the context of the present specification, the term "compound" is understood as indicating either a generic intermediate material obtained during any step of the processing cycle or a semimanufactured product resulting from addition of the cross-linking system to an intermediate material, to make it ready for subsequent vulcanisation.

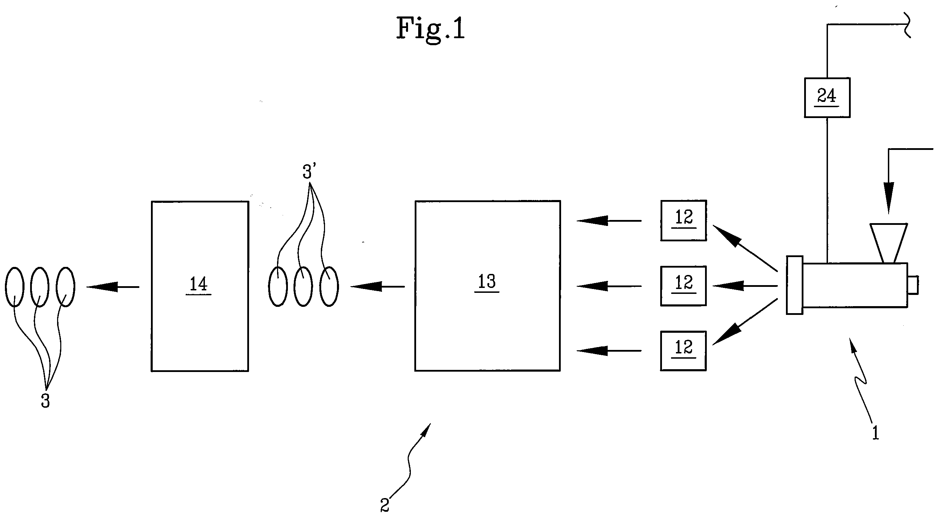

The apparatus for production of elastomeric compounds is part of a plant for producing tyres generally denoted at 2 and diagrammatically illustrated in Fig. 1.

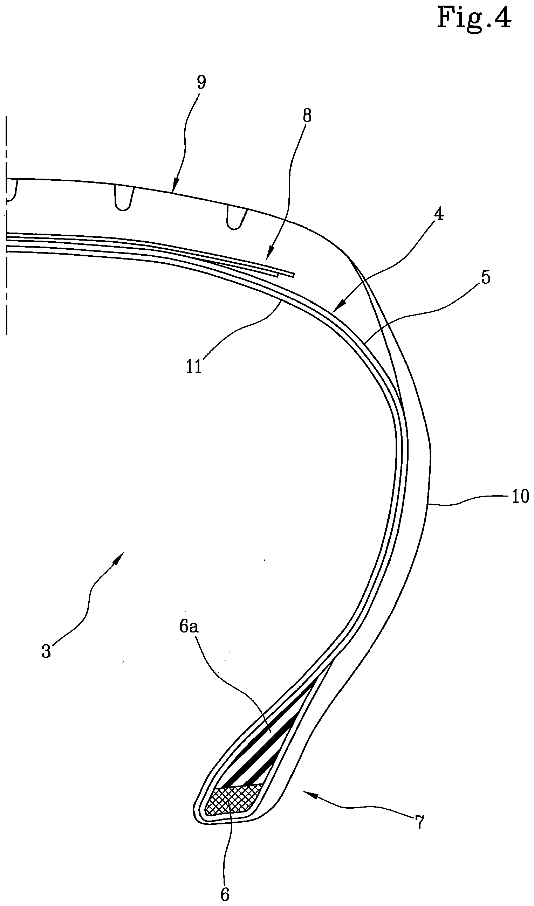

The reference number 3 in Fig. 4 denotes a tyre for vehicle wheels produced according to the method and plant in accordance with the invention. Tyre 3 generally comprises a carcass structure 4 including at least one carcass layer 5 having respectively opposite end flaps in engagement with respective annular anchoring structures 6, possibly associated with elastomeric fillers 6a, integrated into the regions 7 usually identified with the name of "beads". The carcass layer 5 comprises a plurality of textile or metallic reinforcing cords disposed parallel to each other and at least partly embedded in a layer of elastomeric material.

Associated with the carcass structure 4 is a belt structure 8 including one or more belt layers in superposed relationship with each other and with the carcass structure 4, having typically metallic reinforcing cords. These reinforcing cords can have a crossed orientation relative to the circumferential extension direction of tyre 3. At a radially external position to the belt structure 8, a tread band 9 is applied. The tread band 9 can be made up of two portions, a radially more external portion intended for contact with the road surface, and a radially more internal portion 9b, or underlayer, that is in contact with the belt structure 8. In addition, respective sidewalls 10 are applied at an axially external position to the side surfaces of the carcass structure 4, each extending from one of the side edges of the tread band 9 until close to the respective annular anchoring structure 6 to the beads 7. A radially internal surface of tyre 3 is further preferably internally coated with a layer of airtight elastomeric material or a so-called liner 11. In the embodiment shown in Fig. 4, tyre 3 is of the type for motor-vehicles. Typically in this case the belt structure 8 further comprises at least one radially external layer including textile cords disposed at a substantially zero angle relative to the circumferential extension direction of tyre 3.

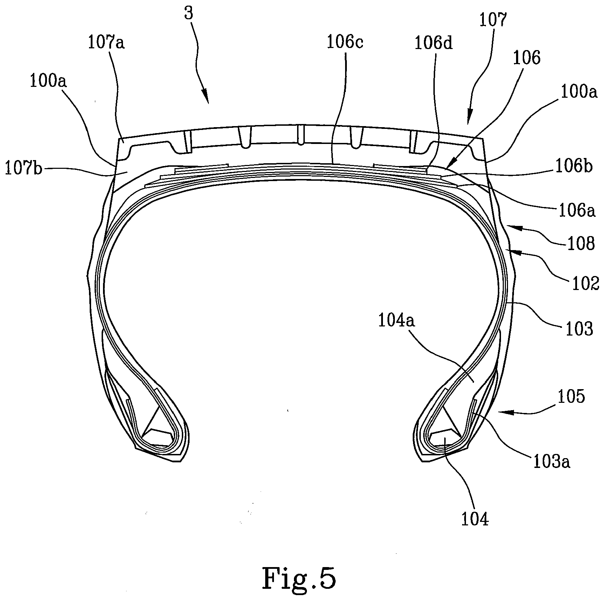

In accordance with an embodiment shown in Fig. 5, tyre 3 is of the type intended for use with heavy vehicles. The expression "heavy vehicle" is generally understood as indicating a vehicle belonging to categories M2~M3, N1~N3 and O2~O4 defined in "Consolidated resolution of the Construction of Vehicles (R.E.3) (1997)", Annex 7, pages 52-59, "Classification and Definition of Power-Driven Vehicles and Trailers", such as trucks, trucks with trailers, tractors, buses, vans and other vehicles of this type. With reference to Fig. 5, tyre 3 comprises a carcass structure 102, including at least one, preferably two, carcass layers 103 formed with typically metallic reinforcing cords embedded in an elastomeric matrix. The carcass layer (or layers) 103 have opposite end flaps 103a in engagement with respective bead cores 104. The latter are placed in the regions 105 of tyre 3 usually identified as "beads". Applied to the outer perimetral edge of the bead cores 104 is an elastomeric filler 104a taking up the space defined between the carcass layer 103 and the respective end flap 103a of the carcass layer 103. At the beads 105, specific reinforcing structures (not shown) can be provided, the function of which is to improve the torque transmission to tyre 3. Associated with the carcass structure 2, at a radially external position, is a belt structure 106 preferably including several belt layers (three layers 106a, 106b, 106c are shown in the specific example) placed in radially superposed relationship with each other and provided with typically metallic reinforcing cords having crossed orientation and/or orientation substantially parallel to the circumferential extension direction of tyre 3. In particular, the belt structure 106 of a tyre for heavy vehicles typically comprises a belt layer usually known as "gravel guard belt" which can be the radially outermost layer 106c of the belt structure and acts as the protection layer against penetration of stones and fine gravel towards the innermost layers of the tyre structure. Applied at a radially external position to the belt structure 106 is the tread band 107. In a further embodiment, the tread band 107 comprises a radially more external portion 107a superposed on an underlayer 107b. The underlayer is superposed on the belt structure and preferably extends on a surface substantially corresponding to the extension surface of the radially external portion of the tread band. Alternatively, said underlayer only extends on a portion of the extension of the radially external portion of the tread band, on opposite side portions thereof, for example. In addition, respective sidewalls 108 of elastomeric material are applied to the side surfaces of the carcass structure 102, each extending from one of the opposite side edges 100a of the tread band 107 until close to the respective beads 105. Preferably, the belt structure of a tyre for heavy vehicles comprises a lateral reinforcing strip 106d that can be radially superposed on the second belt layer 106b, at one of its axial ends. The lateral strip incorporates a plurality of reinforcing elements, preferably high-elongation metal cords. Preferably, in addition, an insert is substantially disposed at the shoulder portion, i.e. the portion where the side end of the tread band is connected to the sidewall. In particular, the insert has a portion that is substantially radially interposed between the belt structure and the tread band, and a portion that is substantially axially interposed between the carcass and sidewall.

In accordance with further embodiments, the tyre is for motorcycles. The cross-section profile of the tyre for motorcycles (not shown) has a high transverse curvature because it must ensure a sufficient footprint area in all inclination conditions of the motorcycle. The transverse curvature is defined by the value of the ratio between the distance of the tread centre from the line passing through the laterally opposite ends of the tread itself, measured on the equatorial plane of the tyre, and the width of the maximum chord defined by the distance between the laterally opposite and axially most spaced-apart ends of the tread itself. By "tyre having a high transverse curvature" it is intended a tyre the transverse-curvature ratio of which is of at least 0.20. Preferably the transverse-curvature ratio is included between 0.20 and 0.5 for a rear tyre and 0.35 and 0.6 for a front tyre, respectively. In the tyre for motorcycles the belt structure can comprise a layer including metal cords (preferably of the high-elongation type) disposed according to a substantially zero angle relative to the circumferential direction of the tyre.

Tyre 3 shown in Fig. 4 or 5 can be manufactured by any process known in the art. Typically, a conventional process used contemplates preparation of the different tyre 3 components described above in the form of semimanufactured products in a raw state, assembly of the semimanufactured products on one or more building drums to form a green tyre and vulcanisation and moulding in a suitable mould provided in a vulcanisation press.

To this aim, plant 2 comprises devices 12 for producing semimanufactured products, devices 13 for building green tyres 3' by assembling said plurality of semimanufactured products, and devices 14 for submitting the green tyres 3' to vulcanisation and cross-linking.

Typically, the compounds used in the present invention for producing the aforesaid semimanufactured products can comprise an elastomeric material including (a) at least one elastomeric polymer and (b) at least one reinforcing filler.

The amount of reinforcing filler contained in the elastomeric material included in the tyre is less than or equal to 120 phr, preferably in the range of from about 10 phr to about 100 phr, most preferably in the range of from about 15 phr to about 70 phr. Preferably, at least one reinforcing filler is a so-called white filler selected from hydroxides, oxides and hydrated oxides, salts and hydrated metal salts or mixtures thereof. Among the specific examples of reinforcing fillers that can be used in the present invention the following can be mentioned: silica, allumina, silicates, calcium carbonate, kaolin, titanium bioxide and mixtures thereof. Among the specific examples of silica it is possible in particular to mention a pyrogenic silica, precipitated amorphous silica, wet silica (hydrated silicic acid) "fumed silica" or mixtures thereof. Preferably silica is used, more preferably precipitated amorphous silica having a surface area as described in ISO 5794-1:2005 standard from about 1 m2/g to about 300 m2/g. Preferably the elastomeric material included in the tyre according to the present invention comprises from about 15 phr to about 70 phr of a silica-based reinforcing filler. Examples of silica-based reinforcing fillers that can be used according to the present invention are commercially available products known as Hi-Sil 190, Hi-Sil 210, Hi-Sil 215, Hi-Sil 233, Hi-Sil 243, from PPG Industries, Ultrasil VN2, Ultrasil VN3, Ultrasil 7000 from Degussa; Zeosil 1165MP from Rhodia. Specific examples of silicates are phyllosilicates such as montmorillonite, bentonite, nontronite, beidellite, volkonskoite, hectorite, saponite, sauconite, vermiculite, halloysite, sericite or mixtures thereof. Particularly preferred is montmorillonite. These layered materials generally contain interchangeable ions such as sodium (Na+), calcium (Ca2+), potassium (K+), magnesium (Mg2+), hydroxide (OH-) or carbonate (CO32-) present on the surfaces between the layers.

The polymeric component of the elastomeric material included in the tyre according to the present invention can consist of any elastomeric polymer or mixture of elastomeric polymers that are commonly used for tyre production and in particular for tread production. According to a preferred embodiment of the present invention, the elastomeric polymer (a) is a diene polymer that can be selected from those commonly used in elastomeric materials cross-linkable with sulphur, that are particularly suitable to produce tyres, i.e. from elastomeric polymers or copolymers with an unsaturated chain having a glass transition temperature (Tg) generally lower than 20°C, preferably included in the range of from 0°C to -110°C. These polymers or copolymers can be of natural origin or can be obtained by solution polymerisation, emulsion polymerisation or gas-phase polymerisation of one or more conjugated diolefins, optionally mixed with at least one comonomer selected from monovinylarens and/or polar comonomers in an amount not exceeding 60% by weight. The conjugated diolefins generally contain 4 to 12, preferably 4 to 8 carbon atoms and can be selected, for example, from: 1,3-butadiene, isoprene 2,3-dimethyl-1,3-butadiene, 1,3-pentadiene, 1,3-hexadiene, 3-butyl-1,3-octadiene, 2-phenyl-1,3-butadiene or mixtures thereof. 1,3-Butadiene and isoprene are particularly preferred. Monovinylarens that can be optionally used as comonomers generally contain 8 to 20, preferably 8 to 12 carbon atoms and can be for example selected from: styrene, 1-vinylnaphthalene, 2-vinylnaphthalene, several alkyl, cycloalkyl, aryl, alkylaryl or arylalkyl styrene derivatives such as, for example, α-metylstyrene, 3-methylstyrene, 4-propylstyrene, 4-cyclohexylstyrene, 4-dodecylstyrene, 2-ethyl-4-benzylstyrene, 4-p-tolylstyrene, 4-(4-fenylbutyl)styrene or mixtures thereof. Styrene is particularly preferred. Polar comonomers that can be optionally used can be selected, for example, from: vinylpyridine, vinylquinoline, acrylic acid and alkylacrylic acid esters and nitriles or mixtures thereof such as methyl acrylate, ethyl acrylate, methyl metacrylate, ethyl metacrylate, acrylonitrile or mixtures thereof. Preferably, the diene elastomer polymer (a) that can be used in the present invention can be for example selected from: cis-1,4-polyisoprene (natural or synthetic rubber, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers or mixtures thereof.

According to a preferred embodiment, said elastomeric material comprises at least 10% by weight of natural rubber, preferably between 20% by weight and 100% by weight of natural rubber, relative to the overall weight of said at least one diene elastomer monomer (a). Said elastomeric material can possibly comprise at least one elastomeric polymer of one or more monoolefins with an olefin comonomer or derivatives thereof (a'). The monoolefins can be selected from: ethylene and α-olefins generally containing 3 to 12 carbon atoms, such as, for example, propylene, 1-butene, 1-pentene, 1-hexene, 1-octene or mixtures thereof. The following are preferred: copolymers of ethylene and an α-olefin, optionally with a diene; isobutene homopolymers or copolymers thereof with reduced diene amounts that are optionally at least partly halogenated. The diene optionally present generally contains 4 to 20 carbon atoms and is preferably selected from: 1,3-butadiene, isoprene, 1,4-hexadiene, 1,4-cyclohexadiene, 5-ethylidine-2-norbornene, 5-methylene-2-norbornene, vinylnorbornene or mixtures thereof. Of these, in particular the following are preferred: ethylene-propylene copolymers (EPR) or ethylene-propylene-diene copolymers (EPDM); polyisobutene, butyl rubbers; halobutyl rubbers, in particular chlorobutyl or bromobutyl rubbers, or mixtures thereof. Also used can be a diene elastomer polymer (a) or an elastomeric polymer (a') made functional by reaction with adapted terminating agents or coupling agents. In particular, the diene elastomer polymers obtained by anionic polymerisation in the presence of an organometallic initiator (in particular an organolithium initiator) can be made functional by making the residual organometallic groups derived from the initiator react with adapted terminating agents or coupling agents such as imines, carbodiimides, alkyl-stannum halides, substituted benzophenones, alkoxysilanes or aryloxysilanes. Possibly, said elastomeric material can further comprise at least one reinforcing carbon black filler (c). According to a preferred embodiment, the reinforcing carbon black filler (c) that can be used in the present invention can be selected from those having a surface area not less than 20 m2/g (stated by STSA - Statistical Thickness Surface Area according to ISO 18852:2005). According to a preferred embodiment said reinforcing carbon black filler (c) is present in the elastomeric material in an amount included between 0.1 phr and 90 phr, preferably between about 3 phr and about 50 phr. The elastomeric material can further comprise at least one silane coupling agent (d).

According to a preferred embodiment, the silane coupling material (d) can be selected from those having at least one hydrolysable silane group that can be for example identified by the following general formula (I) :

(R')₃Si-CₙH₂ₙ-X (I)

wherein groups R' that can be identical or different from each other, are selected from: alkyl, alkoxy, or aryloxy groups or from halogen atoms, provided that at least one of groups R' is an alkoxy or aryloxy group; n is an integer between 1 and 6, terminations included; X is a group selected from: nitroso, mercapto, amino, epoxide, vinyl, imide, chlorine, -(S)ₘCₙH₂ₙ-Si-(R')₃ or -S-COR', wherein m and n are integers between 1 and 6, terminations included, and the groups R' are defined as above. Of the silane coupling agents the preferred ones are bis(3-triethoxysililpropyl)tetrasulfide and bis(3-triethoxysisil-propyl)disulfide. Said coupling agents can be used either on their own or in an appropriate mixture with an inert filler (carbon black, for example) so as to facilitate incorporation of same into the elastomer material. According to a preferred embodiment, said silane coupling agent (d) is present in the elastomeric material in an amount included between about 0.01 phr and about 10 phr, preferably between about 0.5 phr and about 5 phr.

The above reproduced elastomeric materials can be vulcanised according to known techniques, in particular by sulphur-based vulcanisation systems commonly used for diene elastomer polymers. To this aim, in the materials, after one or more thermomechanical-treatment stages, a sulphur-based vulcanising agent is incorporated together with vulcanisation accelerators. In the final treatment step, the temperature is generally maintained lower than 150°C, preferably lower than 120°C and most preferably lower than 100°C, so as to avoid any undesirable pre-crosslinking phenomenon.

The vulcanising agent that is most advantageously used is sulphur or sulphur-containing molecules (sulphur donors), with accelerators and activators known to a person skilled in the art. Activating agents of particular efficiency are zinc compounds and, in particular, ZnO, ZnCO₃, zinc salts of saturated or unsaturated fatty acids, having 8 to 18 carbon atoms such as zinc stearate for example, preferably formed *in situ* in the elastomer composition starting from ZnO and a fatty acid, as well as BiO, PbO, Pb₃O₄, PbO₂, or mixtures thereof. Accelerating agents of common use can be selected from ditiocarbamates, guanidine, thiourea, thiazoles, sulfenamides, thiourames, amines, xanthates, or mixtures thereof.

Said elastomer materials can comprise other additives that are commonly used, selected on the basis of the specific application for which the material is intended. For example, added to said materials may be: antioxidants, anti-aging agents, plasticizers, adhesives, antiozonizers, modifying resins, fibres (Kevlar® pulp, for example), or mixtures thereof. In particular, for the purpose of further improving workability, a plasticizer can be added to said elastomer material generally selected from mineral oils, vegetable oils, synthetic oils or mixtures thereof such as, aromatic oil, naphthenic oil, phthalates, soybean oil, or mixtures thereof. The plasticizer amount is generally included between 0 phr and 70 phr, preferably between 5 phr and about 30 phr.

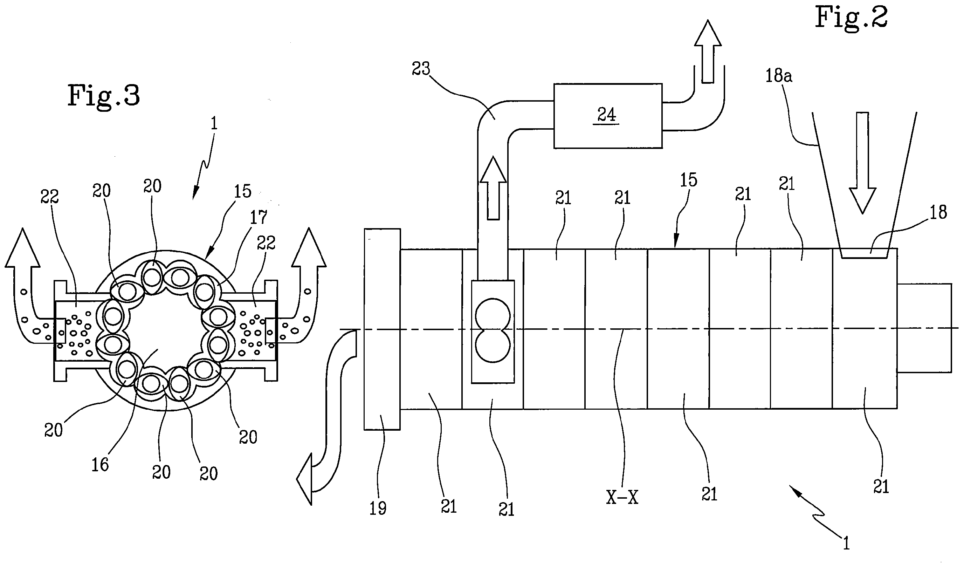

The mixing extruder 1 comprises (Figs. 2 and 3) a substantially cylindrical holding body 15 which mainly extends along a longitudinal direction and carries a mandrel 16 inside a chamber thereof. An annular inner chamber 17 (Fig. 3) is bounded between a radially external surface of mandrel 16 and a radially internal surface of the holding body 15, which chamber 17 is partly coincident with the chamber of the holding body 15. Mandrel 16 extends along a longitudinal axis "X-X" and is coaxially mounted in a fixed manner in the holding body 15.

The holding body 15 has at least one feeding opening 18 that radially opens in a side wall thereof, preferably with a hopper 18a, to enable a compound precursor to be introduced into the annular chamber 17 or alternatively a compound previously produced in a discontinuous mixer, for example. Alternatively, the ingredients of the compound to be produced can be introduced thereinto. The holding body 15 further has a discharge opening for the finished compound placed at a distal end of body 15, at an extruder head 19.

Extrusion screws 20, preferably six in number or a greater number (twelve in the embodiment shown) are disposed in the annular chamber 17, around mandrel 16 and parallel to the longitudinal axis "X-X". Screws 20 penetrate into each other and are self-cleaning; they are rotatably supported by the holding body 15 and substantially extend along the whole longitudinal extension of the annular chamber 17. The extrusion screws 20 are set in rotation by a motor, not shown, and along their longitudinal extension have regions with different structural features for submitting the compound to different process steps. The extrusion screws 20 by their rotation cause advancing of the compound components in a predetermined transport direction and, at the same time, enable treatment of same so as to produce the compound itself giving it the desired physico-chemical features before said compound is ejected through the discharge opening. For instance, along said transport direction of the compound, the extrusion device 1 has a material feeding region, a mastication region, a mixing region and a transport region towards said discharge opening. Irrespective of the specific succession of regions with different treatment, regions of intense mastication, transport regions and mixed regions are present. In the regions of intense mastication the material is submitted to shearing and axial stresses with heat production due to the viscosity of the treated materials. In these regions filling of the annular-chamber portion 17 is almost complete and the treated materials lie substantially in contact with all the corresponding radially internal surface of the holding body 15 and the corresponding radially external surface of mandrel 16. In the transport regions, filling of the annular chamber 17 is included between about 20% and 50% and the materials are submitted to more reduced stresses/deformation.

The holding body 15 at its radially internal surface (Fig. 3) is provided with concavities extending parallel to the longitudinal axis "X-X" and having a cross-section in the form of an arc of a circumference. Mandrel 16 at its radially external surface (Fig. 3) is provided with corresponding concavities extending parallel to the longitudinal axis "X-X" and having a cross-section in the form of an arc of a circumference. Screws 20 are housed in these concavities.

The holding body 15 (Fig. 2) has a tubular shape and is formed with a plurality of annular sectors 21 aligned along the longitudinal axis "X-X". The annular sector 21 that is more downstream relative to the advancing direction of the compound, comprises the hopper 18a opening into the feeding opening 18.

As shown in Figs. 2 and 3, the second-last annular sector 21, counting from the feeding opening 18 to the extruder head 19, is provided with a pair of diametrically opposite ducts 22 opening into the annular inner chamber 17. Each of said ducts 22 is in fluid communication, through suitable pipelines 23, with one or more vacuum pumps 24.

The vacuum pump 24 is preferably of the dry type and has the following features:
- nominal suction capacity included between about 100 m³/h and about 450 m³/h;
- power required by the electric motor included between about 2 kW and about 15 kW.

Preferably, upstream and/or downstream of the mixing extruder 1 at least one discontinuous mixer, a Banbury for example, may be provided.

In use, according to the method of the invention, a compound previously obtained by one or more mixing operations carried out in a discontinuous mixer, a Banbury for example, can be introduced through the feeding opening 18.

Alternatively, it is possible to introduce into the mixing extruder 1, a compound precursor comprising at least one elastomer polymer and at least one reinforcing filler, previously obtained in a mixing processing in a discontinuous mixer, in addition to possible other ingredients.

As an alternative, it is possible to introduced into the mixing extruder 1 the ingredients designed to be mixed for forming the elastomeric compound.

The precursor is moved forward by the extrusion screws 20 towards the extruder head 19 and at the same time it is processed in such a manner as to produce the compound itself and give the same the desired physicochemical features before it is ejected through the discharge opening.

Before ejection of the compound from the extruder head 19, a suction operation is carried out from the inner chamber 17 to the outside, at sector 21 provided with ducts 22, so as to extract substances in the fluid state (gas, liquids, vapours) from the compound.

In particular, suction carries out extraction of possible additives that improve workability of the compound precursor (plastifying oils, for example) but are undesirable in the finished product, and/or solvents and/or cooling water and/or substances generated during mixing (reactive mixing). For instance, in case of compounds for tyre tread production provided with a silica-based reinforcing filler and a silane coupling agent (d), suction causes extraction of the ethanol produced by the silica-silane interaction.

Pump 24 is caused to work for generating the high vacuum, or a suction pressure Pₐ lower than or equal to 40 mbars. The substances extracted by pump 24 are then subsequently sent to suitable filtering devices, not shown.

The Applicant has unexpectedly found that by submitting an elastomer compound inside the extruder to suction at very low pressures, both the processability features of the elastomer compound and the static and dynamic mechanical features of vulcanised samples of said elastomer compound, as well as the performances that can be found in a tyre obtained from semimanufactured products produced using said elastomer compound, change in a sharp and sudden manner.

The Applicant has observed that this change in properties cannot be predicted at all, because for a wide range of values of suction pressure starting from the atmospheric pressure no appreciable variation in the compound occurs.

While the present invention has been described in detail with reference to a mixing extruder 1 provided with extrusion screws 20 disposed in an annular inner chamber 17 (ring extruder), it can also apply to other types of extruders not shown, such as mono-screw or bi-screw extruders. In the bi-screw extruders the two extrusion screws are disposed in side by side relationship, are co-rotating, penetrate into each other and/or are self-cleaning and housed in an inner chamber that, in cross-section, has a two-lobe shape and each screw is housed in one of said two lobes.

### TESTS

The Applicant has carried out tests for evaluating the influence of the suction pressure Pₐ on the features of the obtained compound, the parameters of the mixing process, the mechanical features of the vulcanised product and the performances of tyres produced with such a compound.

### EXAMPLES

The elastomeric materials reproduced in the following table have been prepared for mixing; they relate to an elastomeric compound for tyre tread for motor vehicles (the amounts of the different components are supplied in phr).

**TABLE 1**

| | |
|---|---|
| NR | 10 |
| SBR | 65 |
| BR | 25 |
| Silica | 70 |
| carbon black | 5 |
| stearic acid | 2.5 |
| silane | 6 |
| wax | 1.5 |
| oil | 3 |
| zinc oxide | 2.2 |
| 6-PPD | 2.5 |
| TBBS | 1.6 |
| CTP | 0.3 |
| sulphur | 0.6 |
| TBZTD | 1.2 |

| | |
|---|---|
| NR: natural rubber SBR: styrene-butadiene polymer BR: polybutadiene Silica: Ultrasil® 700 Stearic acid: Stearin N Silane: X50S® silane coupling agent comprising 50% by weight of carbon black and 50% triethoxysilylpropyl)tetrasulfide Wax: microcrystalline wax Antilux® 654 Oil: paraffin oil Sunpar® 2280 Zinc oxide: Rhenogran ZnO-80 6-PPD: paraphenylenediamine Santoflex® 13 TBBS: N-terbutyl-2-benzothiazylsulphenamide (Vulkacit® NZ) CTP: cyclohexyltioftalimide Vulkalent® G TBZTD: tetrabenzylthiuram Perkacit® TBZTD | |

The above listed elastomeric materials were prepared in the following manner (the amounts of the different components are indicated in phr).

All components were mixed in a Banbury type mixer in two mixing steps.

Then a remilling of the compound was carried out without addition of ingredients in a continuous mixer or mixing extruder of the "ring-extruder" type.

Five "remilling" tests (tests 1-5) were carried out in the mixing extruder 1 with the same compound discharged from the Banbury mixer.

**TABLE 2**

| Tests | Suction pressure (mbars) | Torque % | Temperature °C | Compound pressure bars |
|---|---|---|---|---|
| 1^ | 40 | 59.5 | 75.3 | 34.1 |
| 2* | 260 | 50.9 | 71.5 | 35.7 |
| 3* | 400 | 50.9 | 71.7 | 34.4 |
| 4* | 600 | 50.9 | 71.9 | 34.5 |
| 5* | 700 | 49.9 | 72.2 | 34.6 |

| | | | | |
|---|---|---|---|---|
| ^ INVENTION * CONTROL or COMPARISON | | | | |

The first column reproduces the number of tests carried out with the compound previously prepared in the Banbury. The second column indicates the suction pressure at the ventilation section of the mixing extruder. The third column reproduces the value of the mixing torque imparted to the screws of the mixing extruder. The fourth and fifth columns show temperature and pressure respectively, at the extruder head. The tests were carried out at a constant compound flow rate and constant speed of the extrusion screws.

In said table it is possible to see that the torque value sharply increases, by a good 20%, in the tested vacuum conditions, i.e. with a suction pressure value of 40 mbars.

Therefore, the first effect to be observed is a sudden increase in the rotational/mixing torque imparted to the extrusion screws of the mixing extruder. Without pretending to give an exhaustive explanation of the phenomenon, it is believed that probably by carrying out suction at pressures of such an amount, pollutants and lubricants are suddenly removed in a massive form, and more mixing energy can be transferred to the compound. As a result of this variation, a more homogeneous compound is obtained which also has improved physico-chemical features.

On all the five samples of raw compound coming out of the mixing extruder some static and dynamic tests were carried out on green and vulcanised materials.

### Tests on green materials

The Mooney NL viscosity (1+4) at 100°C was measured following the ISO 289-1:2005 standard, on not cross-linked materials, obtained as above described.

The scorching time was measured at 127°C following the ISO 289-2:1994 standard.

The cross-linkable elastomeric compounds were further submitted to rheometric analysis MDR (following the ISO 6502 standard) using a rheometer Monsanto MDR; the tests were carried out at 170°C for 20 minutes to an oscillation frequency of 1.66 Hz (100 oscillations per minute) and an oscillation width of ± 0.5°, measuring the necessary time for achieving an increase of two rheometric units (TS2) and the necessary time for reaching 30% (T30), 60% (T60) and 90% (T90) respectively, of the final torque value (finalM). Also measured was the maximum torque value MH and the minimum torque value ML.

### Tests on vulcanised materials

The static mechanical properties (modulus of elasticity at different elongation, 50%, 100%, 300% respectively CA05, CA1, CA3, ultimate tensile stress CR, ultimate elongation AR) following the UNI 6065 standard were measured on samples of the aforesaid elastomeric compounds vulcanised at 170°C for 10 minutes.
Also measured were the dynamic mechanical properties, using a dynamic device Instron in a compression-traction mode in accordance with the following methods. A test piece of cross-linked elastomeric material vulcanised at 170°C for ten minutes of cylindrical shape (length = 25 mm; diameter = 14 mm), preload compression until 25% of the longitudinal deformation relative to the starting length and maintained to the predetermined temperature (23°C or 70°C) for the whole test duration, was submitted to a sinusoidal dynamic stress having an amplitude of ± 3.5% relative to the length under preload, at a frequency of 10 Hz. The dynamic mechanical properties are expressed in terms of values of the dynamic modulus of elasticity (E') and Tan delta (dissipation factor). The Tan delta value was calculated as a ratio between viscous modulus (E") and modulus of elasticity (E').

The hardness in IRHD degrees was measured at 23°C according to the ISO 48 standard on samples of the aforesaid elastomeric materials vulcanised at 170°C for 10 minutes.

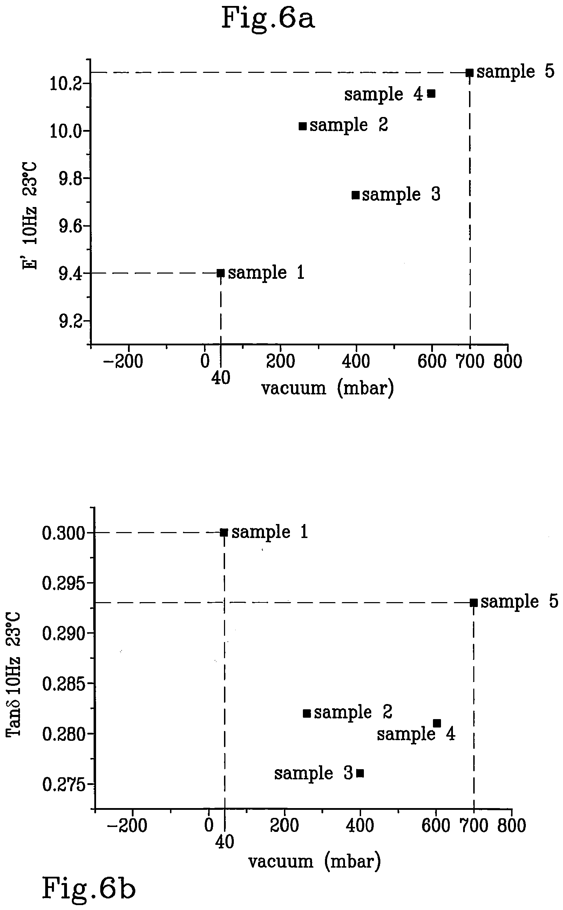

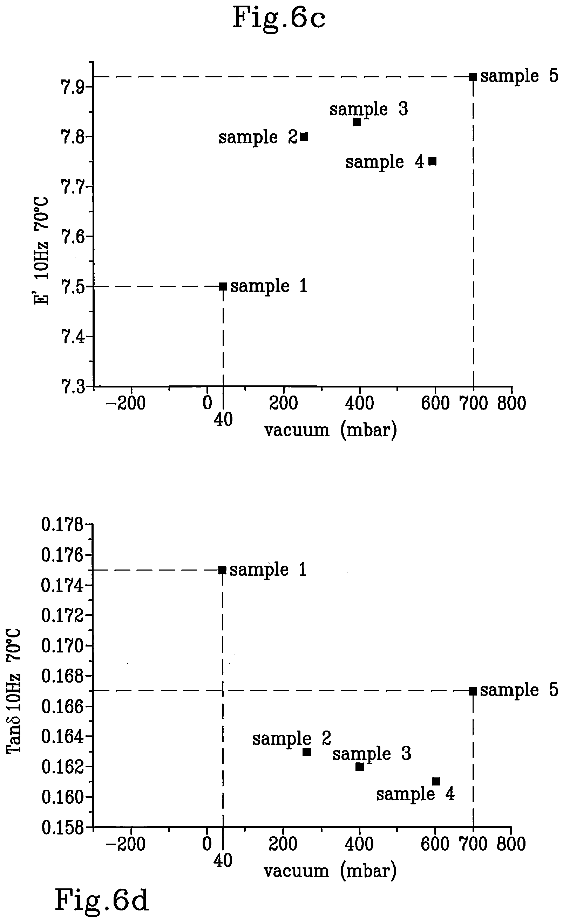

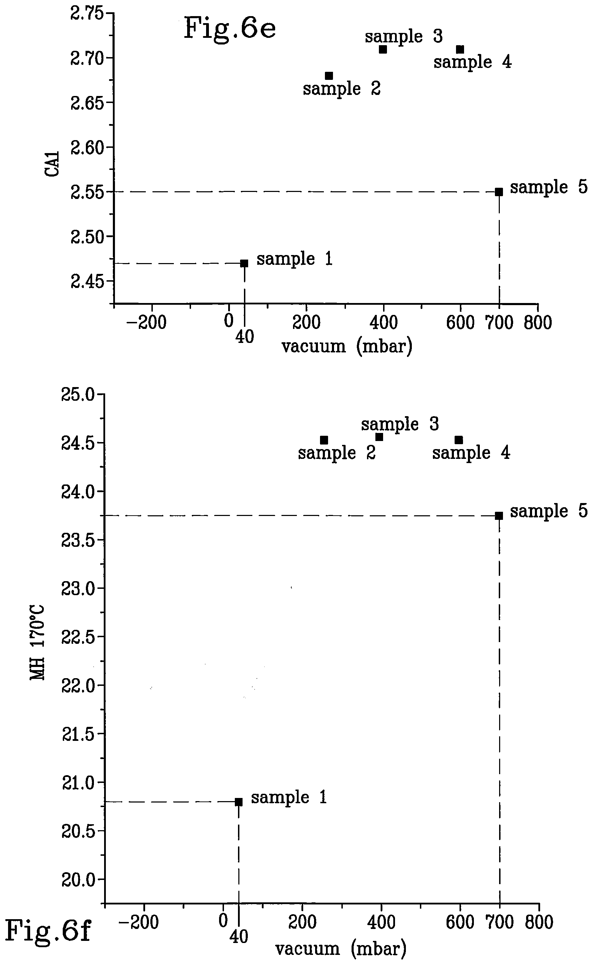

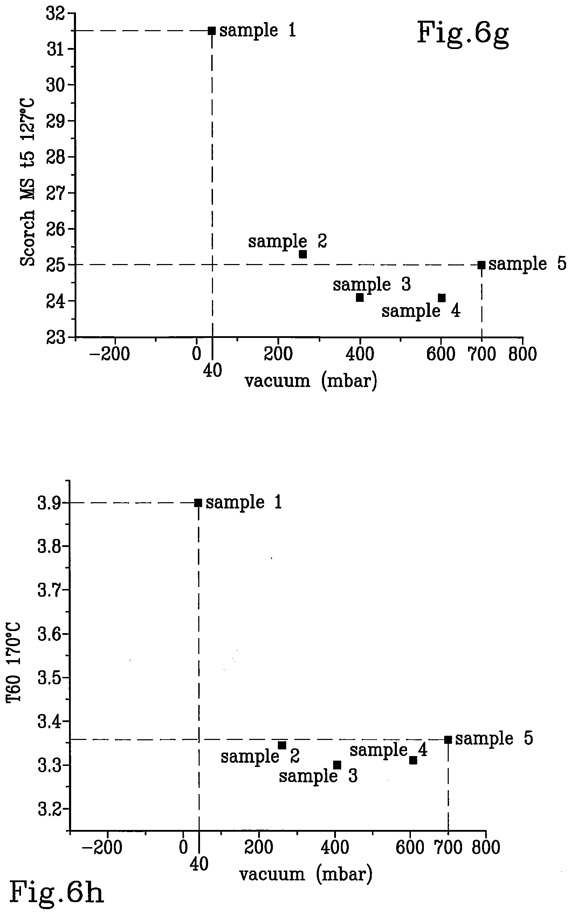

The results are reproduced in the graphs of Figs. 6a-6h. As can be viewed, the sample of the test carried out at a suction pressure of 40 mbars has values (E', tanδ. CA1, MH 170°C, Scorch, T60) well distinct from the values of the four samples of the tests carried out at suction pressures higher than 200 mbars, which is a conformation to that which was noticed with reference to the torque and temperature variation at the mixing extruder head of Table 2. In particular, these values (E', tanδ. CA1, MH, Scorch, T60) have an important and sudden change in the suction pressure of the mixing extruder, going from 260 mbars to 40 mbars.

Static and dynamic tests on green and vulcanised materials were carried out on the following two samples (Table 3) of the five samples of raw compound coming out of the mixing extruder.

**TABLE 3**

| Sample | Suction pressure |
|---|---|
| 1 | 40 mbars |
| 5 | 700 mbars |

The test results are reproduced in the following table.

**TABLE 4**

| Samples | 1 | 5 |
|---|---|---|
| Suction pressure | 40 mbars | 700 mbars |
| CA05 | 1.54 | 1.58 |
| CA1 | 2.47 | 2.55 |
| CA3 | 10.36 | 10.62 |
| CR | 18.58 | 16.54 |
| IRHD | 78.0 | 80.0 |
| Density | 1.207 | 1.206 |
| E' (10Hz 23°C) | 9.40 | 10.24 |
| Tanδ (10Hz 23°C) | 0.301 | 0.293 |
| E' (10Hz 70°C) | 7.5 | 7.92 |
| Tanδ (10Hz 70°C) | 0.175 | 0.167 |
| ML (1+4) | 87.63 | 86.80 |
| ML 170°C | 3.91 | 4.39 |
| MH 170°C | 20.80 | 23.54 |
| TS2 170°C | 1.00 | 0.87 |
| T30 170°C | 2.47 | 2.15 |
| T60 170°C | 3.89 | 3.36 |
| T90 170°C | 6.61 | 6.21 |
| Scorch MSt5 127°C | 31.50 | 25.00 |

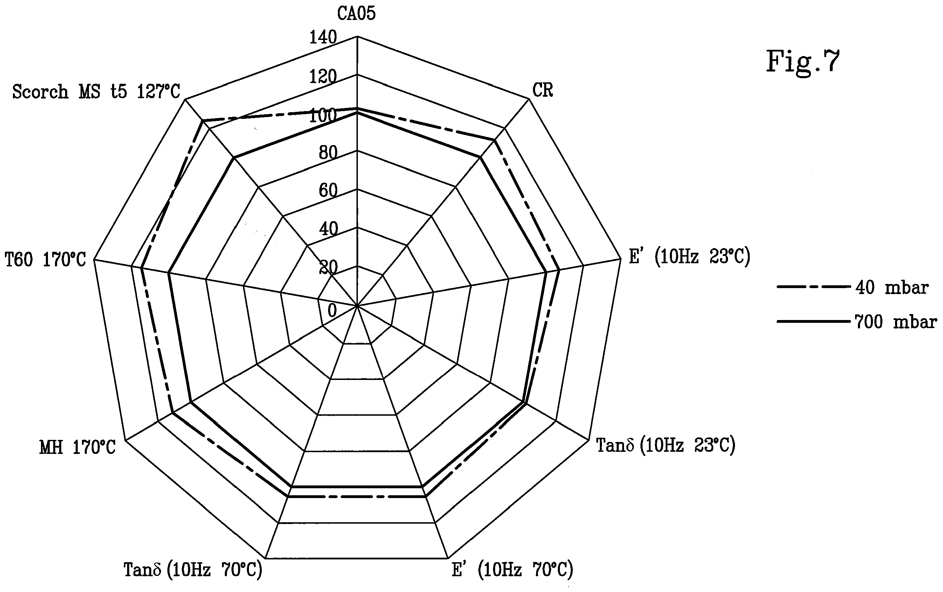

Some of the parameters in the above table (E', tanδ, CA05, CR, MH 170°C, Scorch, T60) have been further graphically represented in the "radar" graph in Fig. 7.

The "radar" graph of Fig. 7 was made, considering the values related to sample 5 (700 mbars) equal to 100 and representing the values related to sample 1 (40 mbars) as the absolute value in percentage of the difference with respect to the values of sample 5. It is apparent that adoption of a suction pressure close to zero has led to a net improvement in the process features of the raw compound being processed (Scorch, T60 and MH 170°C), while the static and dynamic mechanical properties of the vulcanised compound samples have been maintained substantially unchanged or have been improved.

In fact in the radar graph it is possible to notice an increase in the overall area of the polygons relating to the points corresponding to the suction pressure of 40 mbars as compared with the corresponding polygons relating to the corresponding points at the suction pressure of 700 mbars.

From the values of table 4 it is also possible to see that for the vulcanised elastomeric material obtained according to the present invention the values of modulus E' at 23°C and 70°C are slightly less than the corresponding values of the comparative vulcanised material while the tanδ values are higher. These values identify a vulcanised elastomeric material, intended for a tyre tread for example, that is softer and able to show better grip at low temperatures relative to the comparative material.

### Tests on tyres MOUNTED ON FORD MONDEO 2.0 TDCI

The following two winter tyres were manufactured for motor vehicles 225/50R17 with the elastomeric compound of the tyre tread of samples 1 (invention) and 2 (control) :
- Tyre A - made with tread compound according to the invention (sample 1 - suction pressure in the mixing extruder of 40 mbars);
- Tyre B - made with comparative (control) tread compound (sample 5 - suction pressure in the mixing extruder of 700 mbars).

Comparison tests were carried out between the two tyres in terms of behaviour on a dry roadway. The tyres were mounted on the respective rims and inflated to a 200 kPa pressure.

For evaluating the tyre behaviour, the test driver simulated some characteristic manoeuvres (for example: run on a straight stretch, change of lane, negotiating a bend, coming out of a bend) on different roadways. The test driver evaluated the tyre behaviour and assigned a score as a function of the tyre performance.

Table 5 summarises the sheet of the evaluation scores assigned by the test driver to the tyres. The results of these tests are expressed through an evaluation scale representing the subjective opinion expressed by the test driver through a score system. The values reproduced in the following table represent an average value among those obtained in different test sections. It is to be noted that the value scale goes from a minimum of 4 to a maximum of 9.

**TABLE 5**

| | Test | Tyre | |
|---|---|---|---|
| | | A | B |
| Steering | Response features | 7.5 | 6.75 |
| | Linearity on a bend | 7.5 | 6.25 |
| | Steering force | 7.5 | 6.25 |
| Straight running | Even paving | 7.5 | 6.5 |
| | Uneven paving | 7.25 | 6.5 |
| | Furrows | 7.5 | 6.75 |
| Features on a bend Damping | General | 7.5 | 6.25 |
| | Change of lane at high speed | 7.5 | 6.5 |
| | On bad quality asphalt | 7.25 | 7.0 |
| | On transverse furrows | 7.0 | 7.0 |

The tyre according to the invention (A) was considered better substantially in all the test conditions. In particular the steering response was linear, road roughness absorption was considered better and the change of lane more controllable than the tyre manufactured according to the known art (B).

## Claims

1. A method for producing tyres, comprising:
- producing at least one elastomeric compound;
- producing a plurality of structural elements of said tyre, wherein at least one structural element of said plurality of structural elements comprises said at least one elastomeric compound;
wherein production of said elastomeric compound comprises:
i) introducing at least one precursor of said elastomeric compound through at least one feeding opening (18) of a mixing extruder (1), said precursor comprising at least one diene elastomer polymer and at least one reinforcing filler;
ii) mixing and advancing said at least one precursor along a chamber (17) of the mixing extruder (1) containing at least one extrusion screw (20), wherein in the mixing extruder (1) the precursor of said elastomeric compound is submitted to mastication steps alternated with transport steps;
iii) eliminating undesirable fluids during mixing, by sucking them out of said chamber (17);
iv) ejecting the elastomeric compound from the mixing extruder (1) through an extruder head (19);
**characterized in that** fluid suction is carried out at a suction pressure (Pₐ) lower than or equal to about 40 mbars.

2. A method as claimed in claim 1, wherein fluid suction is carried out immediately before ejection of the elastomeric compound.

3. A method as claimed in claim 1 or 2, wherein fluid suction is carried out during at least one of the transport steps.

4. A method as claimed in claim 1 or 2 or 3, wherein the at least one structural element is a tread.

5. A method as claimed in claim 4, wherein the elastomeric-compound precursor comprises at least one silica-based reinforcing filler.

6. A method as claimed in any one of the preceding claims, comprising:
- assembling a green tyre using said plurality of structural elements;
- submitting the green tyre to moulding and cross-linking for obtaining a finished tyre.

7. A method as claimed in any one of the preceding claims, wherein the mixing extruder (1) comprises at least one suction pump (24) in fluid connection with an inner chamber (17) of said mixing extruder (1) and wherein the mixing extruder (1) comprises a holding body (15) delimiting the inner chamber (17) and at least one extrusion screw (20) located in the inner chamber (17); said inner chamber (17) and said at least one extrusion screw (20) extending along a longitudinal axis (X-X); wherein the extrusion screw (20) and inner chamber (17) comprise mastication regions alternated with feeding regions of the compound precursor along the longitudinal axis (X-X), and wherein the mixing extruder (1) comprises an extruder head (19) and wherein the suction pump (24) is in fluid connection with the inner chamber (17) in the vicinity of said extruder head (19).

8. A method as claimed in claim 7, wherein the mixing extruder (1) comprises: a mandrel (16) inserted in the holding body (15) and extending along the longitudinal axis (X-X), said mandrel (16) and holding body (15) delimiting the inner chamber (17) between them, and said inner chamber (17) being of annular conformation; and a plurality of extrusion screws (20) disposed in the inner chamber (17) and parallel to said longitudinal axis (X-X).

9. A method as claimed in claim 7, wherein the inner chamber (17) has a two-lobed cross-section and the mixing extruder (1) comprises two extrusion screws (20) disposed in mutual side by side relationship and each located at a respective lobe.

10. A method as claimed in claim 7 or 8 or 9, wherein the holding body (15) comprises a plurality of annular sectors (21) aligned along the longitudinal axis (X-X), and wherein the suction pump (24) is in fluid connection with at least one of said annular sectors (21).

11. A method as claimed in claim 10, wherein said at least one annular sector (21) comprises at least one suction duct (22) having an end connected to the inner chamber (17) and the opposite end connected to the suction pump (24).

12. A method as claimed in claim 10, wherein said at least one annular sector (21) comprises two diametrically opposite suction ducts (22), connected to the suction pump (24).

13. A method as claimed in any one of claims 7 to 12, wherein the suction pump (24) has a nominal suction capacity included between about 100 m³/h and about 450 m³/h.

14. A method as claimed in any one of claims 7 to 13, wherein the suction pump (24) has a power included between about 2 kW and about 15 kW.

## Patentansprüche

1. Verfahren zur Herstellung von Reifen, wobei das Verfahren umfasst:
- Herstellen zumindest einer Elastomerverbindung;
- Herstellen einer Vielzahl von Strukturelementen des Reifens, wobei zumindest ein Strukturelement der Vielzahl von Strukturelementen die zumindest eine Elastomerverbindung umfasst;
wobei die Herstellung der Elastomerverbindung umfasst:
i) Einleiten zumindest eines Vorläufers der Elastomerverbindung durch zumindest eine Zuführöffnung (18) eines Mischextruders (1), wobei der Vorläufer zumindest ein Dien-Elastomerpolymer und zumindest einen verstärkenden Füllstoff umfasst;
ii) Mischen und Vorrücken des zumindest einen Vorläufers entlang einer Kammer (17) des Mischextruders (1), die zumindest eine Extrusionsschnecke (20) enthält, wobei in dem Mischextruder (1) der Vorläufer der Elastomerverbindung abwechselnd Mastikationsschritten und Transportschritten unterworfen wird;
iii) Beseitigen von unerwünschten Fluiden während des Mischens, durch deren Absaugen aus der Kammer (17);
iv) Ausstoßen der Elastomerverbindung aus dem Mischextruder (l) durch einen Extruderkopf (19); **dadurch gekennzeichnet, dass** die Fluidabsaugung bei einem Saugdruck (Pa) von weniger als oder gleich etwa 40 mbar erfolgt.

2. Verfahren nach Anspruch 1, wobei die Fluidabsaugung unmittelbar vor dem Ausstoßen der Elastomerverbindung erfolgt.

3. Verfahren nach Anspruch 1 oder 2, wobei die Fluidabsaugung während zumindest eines der Transportschritte erfolgt.

4. Verfahren nach Anspruch 1 oder 2 oder 3, wobei das zumindest eine Strukturelement eine Lauffläche ist.

5. Verfahren nach Anspruch 4, wobei der Elastomerverbindungs-Vorläufer zumindest einen verstärkenden Füllstoff auf Silikatbasis umfasst.

6. Verfahren nach einem der vorhergehenden Ansprüche, umfassend:
- Zusammenbauen eines Rohreifens unter Verwendung der Vielzahl von Strukturelementen;
- Unterziehen des Rohreifens einer Formung und Vernetzung, um einen fertigen Reifen zu erhalten.

7. Verfahren nach einem der vorhergehenden Ansprüche, wobei der Mischextruder (1) zumindest eine Saugpumpe (24) in Fluidverbindung mit einer Innenkammer (17) des Mischextruders (1) umfasst, und wobei der Mischextruder (1) einen Haltekörper (15) umfasst, der die Innenkammer (17) begrenzt, sowie zumindest eine Extrusionsschnecke (20), die sich in der Innenkammer (17) befindet; wobei die Innenkammer (17) und die zumindest eine Extrusionsschnecke (20) sich entlang einer Längsachse (X-X) erstrecken; wobei die Extrusionsschnecke (20) und die Innenkammer (17) Mastikationsabschnitte abwechselnd mit Zuführbereichen für den Verbindungsvorläufer entlang der Längsachse (X-X) umfassen, und wobei der Mischextruder (1) einen Extruderkopf (19) umfasst, und wobei die Saugpumpe (24) in der unmittelbaren Umgebung des Extruderkopfs (19) in Fluidverbindung mit der Innenkammer (17) steht.

8. Verfahren nach Anspruch 7, wobei der Mischextruder (1) umfasst: einen Dorn (16), der in den Haltekörper (2) eingeführt ist und sich entlang der Längsachse (X-X) erstreckt, wobei der Dorn (16) und der Haltekörper (15) die Innenkammer (17) dazwischen definieren, und die Innenkammer (17) eine ringförmige Gestalt aufweist; und eine Vielzahl von Extrusionsschnecken (20), die in der Innenkammer (17) und parallel zu der Längsachse (X-X) angeordnet sind.

9. Verfahren nach Anspruch 7, wobei die Innenkammer (17) einen zweilappigen Querschnitt aufweist, und der Mischextruder (1) zwei Extrusionsschnecken (20) aufweist, die in gegenseitiger Beziehung Seite an Seite angeordnet sind und sich jeweils in einem Lappen befinden.

10. Verfahren nach Anspruch 7 oder 8 oder 9, wobei der Haltekörper (15) eine Vielzahl von ringförmigen Sektoren (21) umfasst, die entlang der Längsachse (X-X) ausgerichtet sind, und wobei die Saugpumpe (24) in Fluidverbindung mit zumindest einem der ringförmigen Sektoren (21) steht.

11. Verfahren nach Anspruch 10, wobei der zumindest eine ringförmige Sektor (21) zumindest einen Saugkanal (22) aufweist, dessen ein Ende mit der Innenkammer (17) verbunden ist, und dessen entgegengesetztes Ende mit der Saugpumpe (24) verbunden ist.

12. Verfahren nach Anspruch 10, wobei der zumindest eine ringförmige Sektor (21) zwei diametral entgegengesetzte Saugkanäle (22) aufweist, die mit der Saugpumpe (24) verbunden sind.

13. Verfahren nach einem der Ansprüche 7 bis 12, wobei die Saugpumpe (24) eine Nennsaugkapazität zwischen etwa 100 m3/h und etwa 450 m3/h aufweist.

14. Verfahren nach einem der Ansprüche 7 bis 13, wobei die Saugpumpe (24) eine Leistung zwischen etwa 2 kW und etwa 15 kW aufweist.

## Revendications

1. Procédé de production de pneus, comprenant le fait :
- de produire au moins un composé élastomère ;
- de produire une pluralité d'éléments structurels dudit pneu, où au moins un élément structurel de ladite pluralité d'éléments structurels comprend ledit au moins un composé élastomère ;
dans lequel la production dudit composé élastomère comprend le fait :
i) d'introduire au moins un précurseur dudit composé élastomère à travers au moins une ouverture d'alimentation (18) d'une extrudeuse mélangeuse (1), ledit précurseur comprenant au moins un polymère élastomère diène et au moins une charge renforçante ;
ii) de mélanger et de faire avancer ledit au moins un précurseur le long d'une chambre (17) de l'extrudeuse mélangeuse (1) contenant au moins une vis d'extrusion (20), où, dans l'extrudeuse mélangeuse (1), le précurseur dudit composé élastomère est soumis à des étapes de mastication en alternance avec des étapes de transport ;
iii) d'éliminer des fluides indésirables au cours du mélange, en les aspirant hors de ladite chambre (17) ;
iv) d'éjecter le composé élastomère à partir de l'extrudeuse mélangeuse (1) à travers une tête d'extrudeuse (19) ;
**caractérisé en ce que** l'aspiration de fluide est effectuée à une pression d'aspiration (Pₐ) inférieure ou égale à environ 40 mbars.

2. Procédé tel que revendiqué dans la revendication 1, dans lequel l'aspiration de fluide est effectuée immédiatement avant l'éjection du composé élastomère.

3. Procédé tel que revendiqué dans la revendication 1 ou 2, dans lequel l'aspiration de fluide est effectuée au cours d'au moins l'une des étapes de transport.

4. Procédé tel que revendiqué dans la revendication 1 ou 2 ou 3, dans lequel l'au moins un élément structurel est une bande de roulement.

5. Procédé tel que revendiqué dans la revendication 4, dans lequel le précurseur du composé élastomère comprend au moins une charge renforçante à base de silice.

6. Procédé tel que revendiqué dans l'une quelconque des revendications précédentes, comprenant le fait :
- d'assembler un pneu cru en utilisant ladite pluralité d'éléments structurels ;
- de soumettre le pneu cru au moulage et à la réticulation pour obtenir un pneu fini.

7. Procédé tel que revendiqué dans l'une quelconque des revendications précédentes, dans lequel l'extrudeuse mélangeuse (1) comprend au moins une pompe d'aspiration (24) en communication fluidique avec une chambre intérieure (17) de ladite extrudeuse mélangeuse (1) et où l'extrudeuse mélangeuse (1) comprend un corps de maintien (15) délimitant la chambre intérieure (17) et au moins une vis d'extrusion (20) située dans la chambre intérieure (17) ; ladite chambre intérieure (17) et ladite au moins une vis d'extrusion (20) s'étendant le long d'un axe longitudinal (X-X) ; où la vis d'extrusion (20) et la chambre intérieure (17) comprennent des régions de mastication en alternance avec des régions d'alimentation du précurseur de composé le long de l'axe longitudinal (X-X), et où l'extrudeuse mélangeuse (1) comprend une tête d'extrudeuse (19) et où la pompe d'aspiration (24) est en communication fluidique avec la chambre intérieure (17) au voisinage de ladite tête d'extrudeuse (19).

8. Procédé tel que revendiqué dans la revendication 7, dans lequel l'extrudeuse mélangeuse (1) comprend : un mandrin (16) inséré dans le corps de maintien (15) et s'étendant le long de l'axe longitudinal (X-X), ledit mandrin (16) et le corps de maintien (15) délimitant la chambre intérieure (17) entre eux, et ladite chambre intérieure (17) ayant une conformation annulaire ; et une pluralité de vis d'extrusion (20) disposées dans la chambre intérieure (17) et parallèles audit axe longitudinal (X-X).

9. Procédé tel que revendiqué dans la revendication 7, dans lequel la chambre intérieure (17) a une section transversale à deux lobes et l'extrudeuse mélangeuse (1) comprend deux vis d'extrusion (20) disposées mutuellement côte à côte et situées chacune au niveau d'un lobe respectif.

10. Procédé tel que revendiqué dans la revendication 7 ou 8 ou 9, dans lequel le corps de maintien (15) comprend une pluralité de secteurs annulaires (21) alignés le long de l'axe longitudinal (X-X), et où la pompe d'aspiration (24) est en communication fluidique avec au moins l'un desdits secteurs annulaires (21).

11. Procédé tel que revendiqué dans la revendication 10, dans lequel ledit au moins un secteur annulaire (21) comprend au moins un conduit d'aspiration (22) ayant une extrémité reliée à la chambre intérieure (17) et l'extrémité opposée reliée à la pompe d'aspiration (24).

12. Procédé tel que revendiqué dans la revendication 10, dans lequel ledit au moins un secteur annulaire (21) comprend deux conduits d'aspiration diamétralement opposés (22), reliés à la pompe d'aspiration (24).

13. Procédé tel que revendiqué dans l'une quelconque des revendications 7 à 12, dans lequel la pompe d'aspiration (24) a une capacité d'aspiration nominale comprise entre environ 100 m³/h et environ 450 m³/h.

14. Procédé tel que revendiqué dans l'une quelconque des revendications 7 à 13, dans lequel la pompe d'aspiration (24) a une puissance comprise entre environ 2 kW et environ 15 kW.
